# EUROPEAN PATENT APPLICATION

(11) **EP 4 578 678 A1**
(43) Date of publication of application: **02.07.2025**
(21) Application number: 23856734.1
(22) Date of filing: 25.08.2023
(51) Int. Cl.: B60J 10/30, B60J 10/76

(54) **OUTER BELTLINE SEAL ASSEMBLY AND VEHICLE**

(30) Priority: 25.08.2022 CN 202222269511 U; 17.11.2022 CN 202211438692
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: LI, Yang, Ningbo, Zhejiang 315000 (CN); XU, Yanan, Ningbo, Zhejiang 315000 (CN); JI, Liang, Ningbo, Zhejiang 315000 (CN); LIN, Xianghui, Ningbo, Zhejiang 315000 (CN)
(74) Representative: Boult Wade Tennant LLP
(86) International application number: PCT/CN2023/115060
(87) International publication number: WO 2024/041649

(57) **Abstract**

An exterior belt line molding component includes a vehicle door component (100), a mounting bracket (200) and an exterior belt line molding assembly (300). The mounting bracket is connected to the vehicle door component and located on an inner side at a corner of an end portion of the vehicle door component. The exterior belt line molding assembly includes an exterior belt line molding corner (30) and an exterior belt line molding insert (40), where the exterior belt line molding insert is fixedly connected to the exterior belt line molding corner, and is configured to be snap-fitted with the mounting bracket. A vehicle includes the exterior belt line molding component. According to the exterior belt line molding component, the exterior belt line molding corner can be effectively protected from an excessive deformation, to ensure that the exterior belt line molding corner is reliably assembled to the vehicle door component, and ensure that the exterior belt line molding corner is assembled to the vehicle door component through mounting and fitting of the exterior belt line molding insert to the mounting bracket, thereby improving the ornamental value and the sealing performance of the vehicle.

## Description

The present application claims priorities to Chinese Patent Application No. 202222269511.6 filed on August 25, 2022, and Chinese Patent Application No. 202211438692.9 filed on November 17, 2022. Both of the aforementioned applications are hereby incorporated by reference in their entireties.

### TECHNICAL FIELD

The present application relates to the technical field of vehicles, and in particular relates to an exterior belt line molding component and a vehicle.

### BACKGROUND

At present, due to limitation of modeling space, a corner of an end portion of a vehicle door sheet metal cannot provide a reliable and convenient fixing point for an end portion of an exterior belt line molding. Therefore, when the exterior belt line molding is at the corner position, the exterior belt line molding is generally fixed by means of connecting methods such as double-sided adhesive bonding or the like. However, mounting and fixing by means of bonding may easily result in a risk of degumming of a double-sided adhesive film due to failure, an effective fixing point being impossibly provided for fixing of the exterior belt line molding, and other situations, thereby resulting in problems that the assembly stability and the assembly efficiency of the exterior belt line molding are greatly reduced.

### SUMMARY

### Technical Problem

The main objective of the present application is to provide an exterior belt line molding component, which is intended to improve the assembly stability and the assembly efficiency of an exterior belt line molding assembly.

### Technical Solution

In order to achieve the above objective, the present application provides an exterior belt line molding component, including:
a vehicle door component;
a mounting bracket, connected to the vehicle door component and located on an inner side at a corner of an end portion of the vehicle door component; and
an exterior belt line molding assembly, including an exterior belt line molding corner and an exterior belt line molding insert, where the exterior belt line molding insert is fixedly connected to the exterior belt line molding corner, and is configured to be snap-fitted with the mounting bracket.

In an embodiment, the exterior belt line molding corner includes a corner body and a clamping part connected to a side of the corner body; the clamping part has a clamping groove which is open downwards; the exterior belt line molding insert is at least partially inserted in a groove wall of the clamping groove; the mounting bracket is inserted into the clamping groove and is snap-fitted with the exterior belt line molding insert.

In an embodiment, the exterior belt line molding insert includes a first inserting part and a snapping part arranged at the first inserting part; the first inserting part is fixed to a groove side wall of the clamping groove; the snapping part protrudes from the first inserting part and extends towards another groove side wall of the clamping groove; the mounting bracket is provided with a snapping hole corresponding to the snapping part.

In an embodiment, the first inserting part is provided with a via hole; a connecting part is fixed at a hole wall of the via hole; the connecting part is arranged in parallel with the first inserting part, and extends in a direction away from the mounting bracket; and the snapping part is laterally connected to the connecting part.

In an embodiment, the connecting part includes a guide section and a stopping section; a surface of the guide section facing another groove side wall of the clamping groove is a guiding cambered surface; the snapping part is provided at a joint between the guide section and the stopping section; and a surface of the snapping part facing the guide section is in a smooth transition with the guiding cambered surface;
and/or, an avoidance hole is provided at the groove side wall of the clamping groove corresponding to the via hole, and the avoidance hole is configured for deformation of the connecting part.

In an embodiment, the exterior belt line molding insert further includes a second inserting part; the second inserting part is bendingly connected to the first inserting part, and is fixedly connected to another groove side wall of the clamping groove; and the mounting bracket is located between the first inserting part and the second inserting part.

In an embodiment, the second inserting part is provided with at least one through hole; the through hole penetrates through the first inserting part and is arranged adjacent to the snapping part; and the clamping part is provided with a connecting convex part which is adapted to the through hole;
and/or, the second inserting part is provided with an opening, and the opening is arranged corresponding to the snapping part.

In an embodiment, the mounting bracket includes a fixing part and a support part; the fixing part is fixedly connected to the vehicle door component; and the support part is bendingly connected to the fixing part, and is provided with the snapping hole.

In an embodiment, a length of the support part in an extending direction of the exterior belt line molding corner is longer than that of the fixing part.

In an embodiment, the clamping part and the exterior belt line molding insert are integrally formed by injection molding;
and/or, a protruding rib laterally protrudes from the corner body in a direction perpendicular to the vehicle door component, and the protruding rib is configured to abut against the vehicle door component;
and/or, the corner body is a semi-closed annular structure, and at least one notch is provided on an inner annular surface of the corner body.

In an embodiment, the vehicle door component includes an exterior plate and an interior plate; the interior plate includes an interior plate body, a first connecting section and a first bent section connected between the interior plate body and the first connecting section; the first connecting section is attached with the exterior plate, and the mounting bracket is fixedly provided at the first connecting section.

In an embodiment, the exterior plate includes a second connecting section; the second connecting section is provided with a flanging along an edge of the second connecting section, and the flanging covers the first connecting section to form a hemming structure;
and/or, the exterior plate further includes an exterior plate body, and the exterior plate body and the interior plate body are spaced apart to form an accommodating cavity for a window glass to move;
the exterior belt line molding assembly further includes an exterior belt line molding body connected to the exterior belt line molding corner, where the exterior belt line molding body is configured to attach with a side of the window glass, and a horizontal height of a top end of the exterior belt line molding body is lower than a horizontal height of a top end of the exterior plate body.

The present application further provides a vehicle, and the vehicle includes the exterior belt line molding component as described above.

### Advantageous Effects

According to the technical solution of the present application, the snap-fitting between the mounting bracket and the exterior belt line molding insert provides an effective fixing point for the assembly of the exterior belt line molding corner, and simultaneously is capable of improving the connection and fastening between the exterior belt line molding corner and the vehicle door component, thereby improving the assembly stability and the assembly efficiency of the exterior belt line molding corner. The exterior belt line molding insert is fixedly connected to the exterior belt line molding corner, thereby effectively preventing the exterior belt line molding corner from being excessively deformed, and ensuring that the exterior belt line molding corner is reliably assembled to the vehicle door component. While the mounting bracket is fixed on the inner side at the corner of the end portion of the vehicle door component, which can ensure that the exterior belt line molding corner is assembled to the vehicle door component through the mounting and fitting of the exterior belt line molding insert to the mounting bracket; and when the vehicle door component is applied to the vehicle, the concealed arrangement of the exterior belt line molding corner and the sealing effect of the vehicle can be achieved, thereby improving the ornamental value and the sealing performance of the vehicle.

### BRIEF DESCRIPTION OF DRAWINGS

In order to illustrate the technical solutions in the embodiments of the present application or in the prior arts more clearly, the following briefly introduces the accompanying drawings required for describing the embodiments or the prior arts. Apparently, the accompanying drawings in the following description are merely intended for some embodiments of the present application, and for those ordinarily skilled in the art, other drawings may also be obtained according to the structures shown in these drawings without creative efforts.
FIG. 1 is a schematic structural diagram of an exterior belt line molding component in an embodiment according to the present application.
FIG.2 is a schematic structural diagram of an exterior belt line molding component in FIG. 1 without an interior belt line molding assembly.
FIG. 3 is a partial enlarged view at A in FIG. 2.
FIG. 4 is a sectional view of the exterior belt line molding component in FIG. 3.
FIG. 5 is a schematic assembly diagram of an exterior belt line molding corner and a mounting bracket in FIG. 4.
FIG. 6 is a schematic structural diagram of an exterior belt line molding insert in FIG. 5.
FIG. 7 is a schematic structural diagram of the exterior belt line molding corner in FIG. 5.
FIG. 8 is a schematic structural diagram of the mounting bracket in FIG. 5.
FIG. 9 is an exploded view of the exterior belt line molding component in FIG. 1.
FIG. 10 is a sectional view of an exterior belt line molding component in FIG. 3 in another embodiment.
FIG. 11 is a schematic structural diagram of a mounting bracket in FIG. 4 in another embodiment.
FIG. 12 is a schematic structural diagram of an exterior belt line molding insert in FIG. 4 in another embodiment.
FIG. 13 is a schematic structural diagram of an exterior belt line molding assembly in FIG. 9.

### Description of reference numbers:

**[Table 1_sm_0001]**

| Reference number | Name | Reference number | Name |
|---|---|---|---|
| 100 | vehicle door component | 321 | clamping groove |
| 11 | exterior plate | 322 | avoidance hole |
| 111 | exterior plate body | 323 | connecting convex part |
| 112 | second connecting section | 33 | exterior belt line molding body |
| 113 | flanging | 34 | fixing bracket |
| 12 | interior plate | 40 | exterior belt line molding insert |
| 121 | interior plate body | 41 | first inserting part |
| 122 | first connecting section | 411 | via hole |
| 123 | first bent section | 42 | connecting part |
| 200 | mounting bracket | 421 | guide section |
| 21 | snapping hole | 422 | stopping section |
| 22 | fixing part | 423 | guiding cambered surface |
| 23 | support part | 43 | snapping part |
| 300 | exterior belt line molding assembly | 44 | second inserting part |
| 30 | exterior belt line molding corner | 441 | through hole |
| 31 | corner body | 442 | opening |
| 311 | protruding rib | 400 | interior belt line molding assembly |
| 312 | notch | 500 | window glass |
| 32 | clamping part | 32a | clamping convex part |

Implementation of the objectives, functional features and advantages of the present application would be further described with reference to the accompanying drawings in combination with embodiments.

### DESCRIPTION OF EMBODIMENTS

In the following, the technical solutions in the embodiments of the present application will be clearly and comprehensively described with reference to the accompanying drawings in the embodiments of the present application. Apparently, the described embodiments are merely a part rather than all of the embodiments of the present application. Based on the embodiments of the present application, all other embodiments obtained by those ordinarily skilled in the art without creative efforts shall fall within the scope of protection of the present application.

In the present application, unless otherwise expressly specified or limited, the terms such as "connect", "fix", and the like, should be understood broadly. For example, the term "fix" may refer to a fixed connection or a detachable connection, or refer to being integrated; it may refer to a mechanical connection, an electrical connection, a direct connection, an indirect connection through an intermediate medium, an interior communication of two elements or an interaction relationship between two elements, unless otherwise expressly defined. For those ordinarily skilled in the art, specific meanings of the above terms in the present application can be understood according to specific situations.

It should be noted that, if an embodiment of the present application relates to a directivity indication (such as up, down, left, right, front, back, or the like), the directivity indication is only used to explain a relative position relationship, a motion condition, or the like between components in a certain specific posture (as shown in the drawings), and if the specific posture changes, the directivity indication also accordingly changes.

In addition, if an embodiment of the present application relates to a description such as "first", "second", or the like, the description "first", "second", or the like is only used for the purpose of description, and cannot be understood as indicating or implying the relative importance thereof or implicitly indicating the number of technical features indicated. Thus, the feature defined by "first" or "second" may explicitly or implicitly include at least one of features. In addition, "and/or" appearing in the full text means to include three parallel solutions. Taking "A and/or B" as an example, "A and/or B" includes an A solution, or a B solution, or a solution which is simultaneously satisfied by A and B. In addition, the technical solutions of respective embodiments can be combined with each other, but the combination must come from a basis that those ordinarily skilled in the art are able to implement. When the combination of the technical solutions is contradictory or cannot be implemented, it should be considered that the combination of the technical solutions does not exist, nor does the combination fall within the scope of protection of the present application.

The present application provides an exterior belt line molding component.

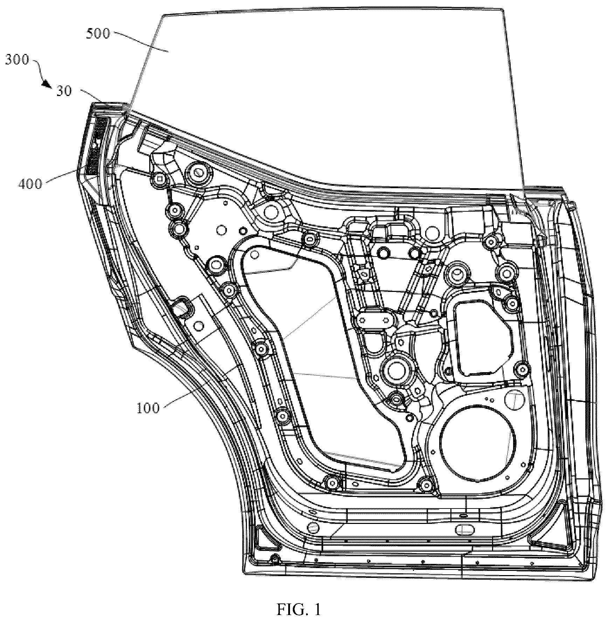

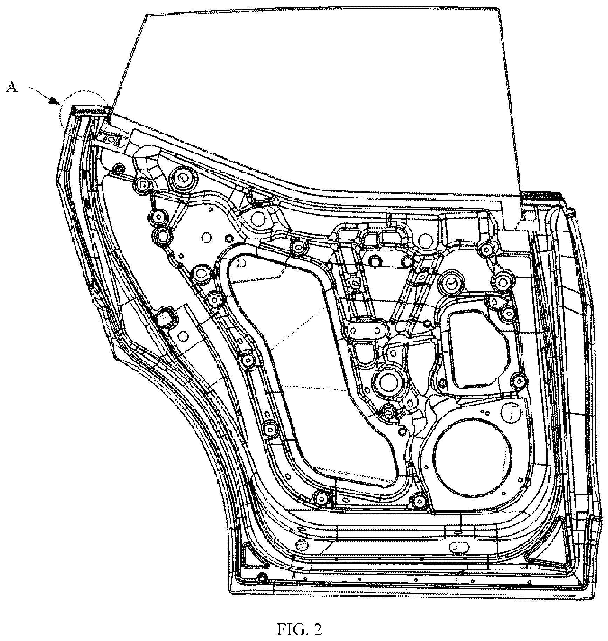

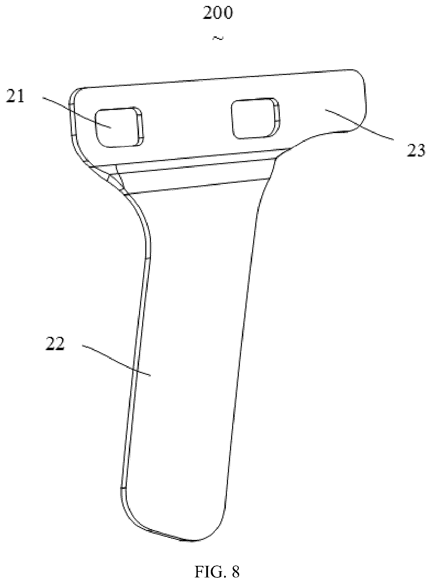

Referring to FIG. 1 to FIG. 9, in an embodiment of the present application, the exterior belt line molding component includes a vehicle door component 100, a mounting bracket 200 and an exterior belt line molding assembly 300. The mounting bracket 200 is connected to the vehicle door component 100, and is located on an inner side at a corner of an end portion of the vehicle door component 100. The exterior belt line molding assembly 300 includes an exterior belt line molding corner 30 and an exterior belt line molding insert 40. The exterior belt line molding insert 40 is fixedly connected to the exterior belt line molding corner 30, and is configured to be snap-fitted with the mounting bracket 200. In such arrangement, the exterior belt line molding insert 40 is snap-fitted with the mounting bracket 200 to provide an effective fixing point for assembly of the exterior belt line molding corner 30 while improving connection stability between the exterior belt line molding corner 30 and the vehicle door component 100, thereby improving assembly stability and assembly efficiency of the exterior belt line molding corner 30.

Specifically, the mounting bracket 200 may be fixedly connected to the vehicle door component 100 by means of spot welding, inserting, clamping, or the like, to ensure that the mounting bracket 200 is securely mounted on the vehicle door component 100, simultaneously to provide a mounting fixed point for the reliable assembly of the exterior belt line molding corner 30, so that it is convenient for the exterior belt line molding corner 30 to be quickly and securely assembled on the mounting bracket 200 through the exterior belt line molding insert 40, achieving the reliable assembly of the exterior belt line molding corner 30, and meanwhile it is conducive to improving the assembly stability and the assembly efficiency of the exterior belt line molding corner 30.

The mounting bracket 200 is located on the inner side at the corner of the end portion of the vehicle door component 100. The corner of the end portion of the vehicle door component 100 specifically refers to an upper end portion of the vehicle door component 100 away from a hinge with the vehicle body, so that the mounting fixed point can be provided for the exterior belt line molding corner 30 in the exterior belt line molding assembly 300, facilitating the connection and fixing between the exterior belt line molding corner 30 and the vehicle door component 100.

The mounting bracket 200 is located on the inner side of the vehicle door component 100, that is, the mounting bracket 200 is located at a side of the vehicle door component 100 facing the vehicle body, so that the exterior belt line molding corner 30 can be tightly attached with the vehicle body, thereby playing a sealing role and improving the sealing performance of the vehicle. And it can be ensured that the exterior belt line molding corner 30 is shielded by the vehicle door component 100 to achieve a concealed arrangement, reducing the visible area of the exterior belt line molding corner 30, and improving the ornamental value of the vehicle.

The exterior belt line molding corner 30 and the exterior belt line molding insert 40 are of an integrated structure, and can be connected into a whole by means of concave-convex embedding, integral molding, clamping, or the like. In this way, the exterior belt line molding corner 30 can be supported by the exterior belt line molding insert 40 to prevent the exterior belt line molding corner 30 from being excessively deformed. While the exterior belt line molding insert 40 is snap-fitted with the mounting bracket 200, a connection therebetween is possible by means of reversible snaping, deformative press-fitting, or the like, effectively preventing the sealing failure caused by the exterior belt line molding corner 30 being separated from the mounting bracket 200.

According to the technical solution of the present application, the snap-fitting between the mounting bracket 200 and the exterior belt line molding insert 40 provides the effective fixing point for the assembly of the exterior belt line molding corner 30, and simultaneously is capable of improving the connection firmness between the exterior belt line molding corner 30 and the vehicle door component 100, thereby improving the assembly stability and the assembly efficiency of the exterior belt line molding corner 30. The exterior belt line molding insert 40 is fixedly connected to the exterior belt line molding corner 30, thereby effectively preventing the exterior belt line molding corner 30 from being excessively deformed, and ensuring that the exterior belt line molding corner 30 is reliably assembled to the vehicle door component 100. While the mounting bracket 200 is fixed on the inner side at the corner of the end portion of the vehicle door component 100, which can ensure that the exterior belt line molding corner 30 is assembled to the vehicle door component 100 through the mounting and fitting of the exterior belt line molding insert 40 to the mounting bracket 200; and when the vehicle door component 100 is applied to the vehicle, which can achieve the concealed arrangement of the exterior belt line molding corner 30 and the sealing effect of the vehicle, thereby improving the ornamental value and the sealing performance of the vehicle.

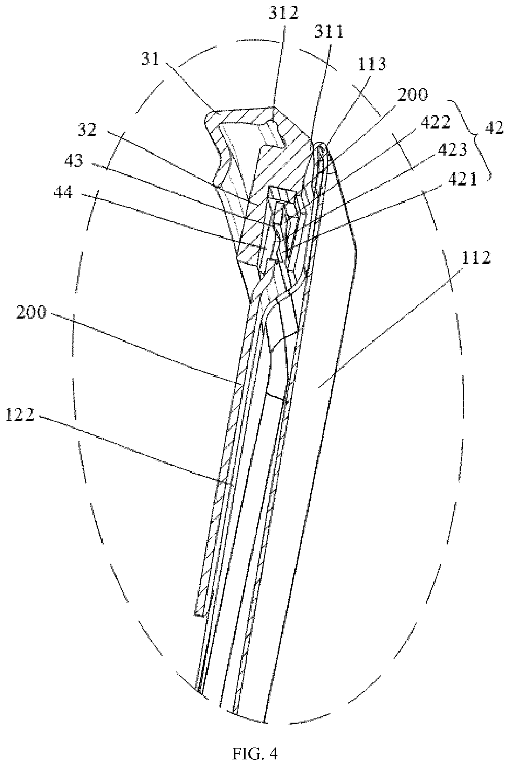

Referring to FIG. 4 to FIG. 7, in an embodiment, the exterior belt line molding corner 30 includes a corner body 31 and a clamping part 32 connected to a side of the corner body 31, the clamping part 32 has a clamping groove 321 which is open downwards, and the exterior belt line molding insert 40 is at least partially inserted in a groove wall of the clamping groove 321. The mounting bracket 200 is inserted into the clamping groove 321 and is snap-fitted with the exterior belt line molding insert 40. It should be understood that, the exterior belt line molding corner 30 may be inserted from top to bottom along the vehicle door component 100, and a top end of the mounting bracket 200 is enabled to extend into the clamping groove 321, so that the exterior belt line molding insert 40 can be snap-fitted with the mounting bracket 200, thereby fully limiting the degree of freedom of the exterior belt line molding corner 30, to fulfill the reliable assembly of the exterior belt line molding corner 30.

The arrangement of the clamping groove 321 can limit the effective assembling range of the mounting bracket 200, and ensure that the mounting bracket 200 can enter the clamping groove 321 during assembly, so that the mounting bracket 200 can be quickly snap-fitted with the exterior belt line molding insert 40, thereby improving the assembly efficiency of the exterior belt line molding corner 30.

The exterior belt line molding insert 40 is at least partially inserted in the groove wall of the clamping groove 321. The groove wall may be a groove side wall, and may also be a groove bottom wall. By being partially inserted in the groove wall of the clamping groove 321, it is conducive to ensuring that the exterior belt line molding insert 40 is reliably connected to the clamping part 32. In this way, a remaining part may be exposed from the groove wall of the clamping groove 321, to be snapped with the mounting bracket 200 extending into the clamping groove 321, thereby achieving the reliable assembly between the exterior belt line molding corner 30 and the vehicle door component 100.

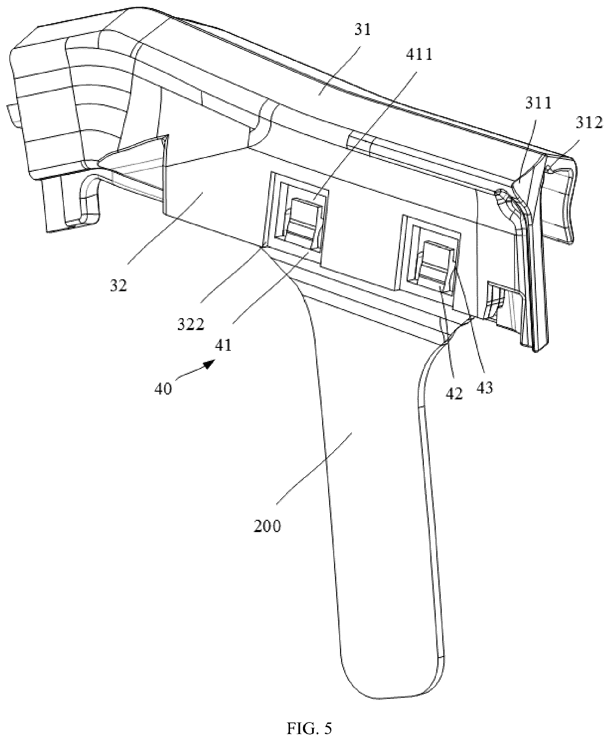

Referring to FIG. 5 to FIG. 6, in an embodiment, the exterior belt line molding insert 40 includes a first inserting part 41 and a snapping part 43 arranged at the first inserting part 41. The first inserting part 41 is fixed to a groove side wall of the clamping groove 321. The snapping part 43 protrudes from the first inserting part 41, and extends towards another groove side wall of the clamping groove 321. The mounting bracket 200 is provided with a snapping hole 21 corresponding to the snapping part 43. It should be understood that, in a process of the mounting bracket 200 moving towards a direction of the groove bottom wall of the clamping groove 321, the mounting bracket 200 is snap-fitted with the protrudingly arranged snapping part 43 through its own snapping hole 21, thereby in cooperation with the specific structure of the clamping groove 321, effectively limiting the movement of the mounting bracket 200 in a direction perpendicular to the groove bottom wall and the movement in a direction perpendicular to the groove side wall, in other words, limiting the movement of the exterior belt line molding corner 30 relative to the mounting bracket 200, so that the connecting convenience and connecting stability between the exterior belt line molding insert 40 and the mounting bracket 200 may be improved, thereby improving the assembly efficiency and the assembly reliability of the exterior belt line molding corner 30.

The first inserting part 41 and the clamping part 32 are of an integrated structure, and may be connected by means of inserting, bonding, integral molding, or the like. The snapping part 43 is laterally connected to the first inserting part 41, which may be directly and fixedly connected to the first inserting part 41; and the connection therebetween is also be possible by means of an adapter, to facilitate the mutual cooperation limitation between the snapping part 43 and the snapping hole 21. However, in other embodiments, the snapping hole 21 may be provided at the first inserting part 41, and the snapping part 43 is provided at the mounting bracket 200.

Specifically, in an embodiment, the first inserting part 41 is provided with a via hole 411. A connecting part 42 is fixed at a hole wall of the via hole 411. The connecting part 42 is arranged in parallel with the first inserting part 41, and extends in a direction away from the mounting bracket 200. The snapping part 43 is laterally connected to the connecting part 42, to continuously apply a force to the exterior belt line molding corner 30 after the exterior belt line molding corner 30 is inserted into the mounting bracket 200 and the snapping part 43 abuts against the mounting bracket 200. In this way, the connecting part 42 is deformed under the force, the snapping part 43 always abuts against the mounting bracket 200 and moves relative to the mounting bracket 200 until the snapping part 43 is snapped into the snapping hole 21.

A plurality of via holes 411 may be provided along an extending direction of the corner body 31. In this way, the connecting part 42 connected with the snapping part 43 is provided in each via hole 411, and the mounting bracket 200 is provided with the via hole 411 corresponding to each snapping part 43, so that the mounting bracket 200 may be added with increased clamping points, meanwhile, the exterior belt line molding insert 40 can be effectively prevented from producing a rotation trend relative to the mounting bracket 200, making the connection fastening and the connection stability between the exterior belt line molding insert 40 and the mounting bracket 200 be greatly improved.

The connecting part 42 and the first inserting part 41 are arranged in parallel, so that the snapping part 43 can be laterally connected to the connecting part 42 and extend towards another groove side wall of the clamping groove 321, and a guiding role can be played during an insertion into the mounting bracket 200, to make the snapping part 43 be quickly and accurately snapped into the snapping hole 21, thereby improving the assembly efficiency between the exterior belt line molding insert 40 and the mounting bracket 200. While the connecting part 42 extends in the direction away from the mounting bracket 200, it should be understood that, the arrangement of the via holes 411 not only can reduce the weight of the exterior belt line molding insert 40, but also can provide avoidance space for the deformation of the connecting part 42. The via hole 411 includes a first hole wall and a second hole wall which are oppositely arranged. The connecting part 42 has its one end connected to the first hole wall, and a gap is reserved between another end and the second hole wall. In this way, when the connecting part 42 is stressed, the connecting part 42 can bend and deform in the via hole 411, for the mounting bracket 200 to move in the clamping groove 321, thus when the snapping part 43 is aligned with the snapping hole 21 of the mounting bracket 200, the connecting part 42 would be restored to its original state and the snapping part 43 would be inserted into the snapping hole 21, thereby achieving the reliable snapping between the snapping part 43 and the snapping hole 21.

More specifically, in an embodiment, the connecting part 42 includes a guide section 421 and a stopping section 422. A surface of the guide section 421 facing another groove side wall of the clamping groove 321 is a guiding cambered surface 423. The snapping part 43 is provided at a joint between the guide section 421 and the stopping section 422, and a surface of the snapping part 43 facing the guide section 421 is in a smooth transition with the guiding cambered surface 423. By means of this arrangement, on the one hand, a guiding function can be achieved, and the arrangement of the guiding cambered surface 423 makes the mounting bracket 200 move relative to the snapping part 43 along the guiding cambered surface 423, which facilitates quick locating of the position of the snapping part 43; and the surface of the snapping part 43 facing the guide section 421 is in a smooth transition with the guiding cambered surface 423, which effectively prevents the mounting bracket 200 from being stuck at the joint between the snapping part 43 and the guide section 421, facilitates the quick snap-fitting between the snapping hole 21 and the snapping part 43, and accelerates the assembly efficiency. On the other hand, a limiting function can be achieved, and in cooperation with the arrangement of the stopping section 422, when the snapping part 43 and the snapping hole 21 are snapped to each other, the stopping section 422 abuts against an edge of the snapping hole 21, and the snapping part 43 abuts against the hole wall of the snapping hole 21, which effectively limits the movement of the exterior belt line molding corner 30 relative to the mounting bracket 200.

Since the surface of the guide section 421 facing another groove side wall of the clamping groove 321 is the guiding cambered surface 423, and the guiding cambered surface 423 is protruded in a direction away from another groove side wall of the clamping groove 321, in order to avoid the occurrence of risks such as structural fracture caused by the guide section 421 being excessively thin, a surface of the guide section 421 facing away from another groove side wall of the clamping groove 321 is protrudingly arranged to play a thickening role.

In an embodiment, an avoidance hole 322 is provided at a groove side wall of the clamping groove 321 corresponding to the via hole 411, and the avoidance hole 322 is configured for deformation of the connecting part 42. In this way, avoidance space can be provided, so that the connecting part 42 can be reliably deformed under an abutting action of the mounting bracket 200, and at the same time, without affecting the whole structure of the clamping part 32, the manufacturing cost can be reduced.

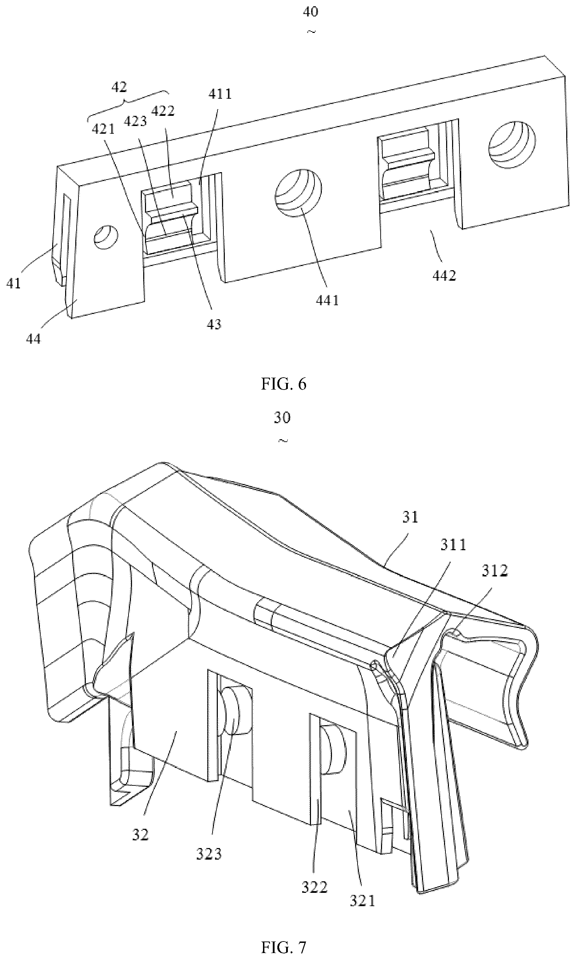

Referring to FIG. 6, in an embodiment, the exterior belt line molding insert 40 further includes a second inserting part 44. The second inserting part 44 is bendingly connected to the first inserting part 41, and is fixedly connected to another groove side wall of the clamping groove 321. The mounting bracket 200 is located between the first inserting part 41 and the second inserting part 44. It should be understood that, the exterior belt line molding insert 40 is arranged along the groove wall of the clamping groove 321, which can increase the effective contact area, further enhance the connection tightness between the exterior belt line molding insert 40 and the clamping part 32, and further limit the mounting bracket 200 between the first inserting part 41 and the second inserting part 44, thereby preventing the mounting bracket 200 from acting on the clamping part 32 to make the clamping part 32 excessively deformed, or preventing the mounting bracket 200 from separating from the clamping part 32, thereby being conducive to improving the assembly reliability between the exterior belt line molding corner 30 and the mounting bracket 200.

Two surfaces of the first inserting part 41 and the second inserting part 44, which are arranged opposite to each other, are disposed in a gradually expanding manner in a direction away from the groove bottom wall of the clamping groove 321, to guide the mounting bracket 200 to extend between the first inserting part 41 and the second inserting part 44, thereby completing the snap-fitting between the snapping hole 21 of the mounting bracket 200 and the snapping part 43.

Further, in an embodiment, the second inserting part 44 is provided with at least one through hole 441. The through hole 441 penetrates through the first inserting part 41, and is arranged adjacent to the snapping part 43. The clamping part 32 is provided with a connecting convex part 323 which is adapted to the through hole 441. It should be understood that, a plurality of snapping parts 43 may be provided, that is, a plurality of via holes 411 are provided and are arranged in a staggered manner with the through holes 441. On the one hand, it is conducive to increasing the effective contact area between the exterior belt line molding insert 40 and the clamping part 32, thereby improving the connection firmness between the exterior belt line molding insert 40 and the clamping part 32. On the other hand, it is conducive to uniformed stress, thereby improving the connection stability of the exterior belt line molding insert 40.

A plurality of through holes 441 may be provided, and the plurality of through holes 441 may be arranged in an array on the second inserting part 44, that is, they may be disposed at intervals along a length extending direction of the second inserting part 44, and/or may be disposed at intervals along a width extending direction of the second inserting part 44.

In an embodiment, the second inserting part 44 is provided with an opening 442. The opening 442 is arranged corresponding to the snapping part 43, which can reduce the weight of the exterior belt line molding insert 40. Further, when the exterior belt line molding insert 40 is manufactured by using an integrated molding process, the molding of the exterior belt line molding insert 40 is facilitated.

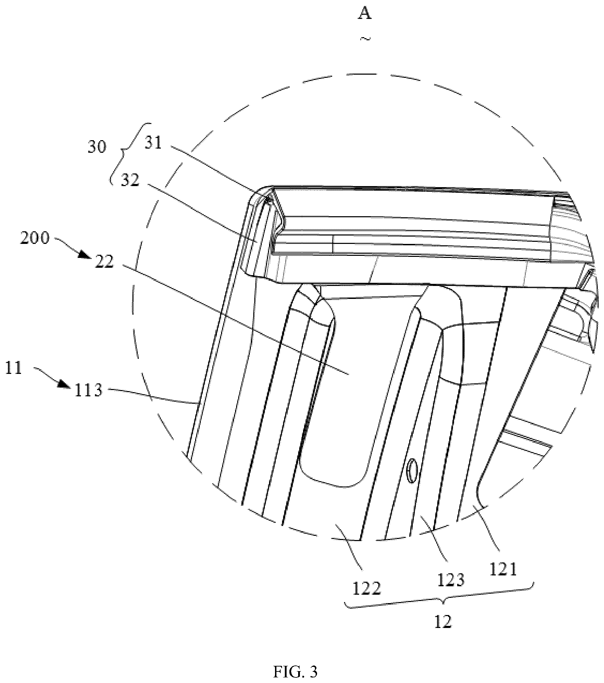

Referring to FIG. 3 to FIG. 4 and FIG. 8, in an embodiment, the mounting bracket 200 includes a fixing part 22 and a support part 23. The fixing part 22 is fixedly connected to the vehicle door component 100. The support part 23 is bendingly connected to the fixing part 22, and is provided with a snapping hole 21. It should be understood that, the fixing part 22 may be fixed on the vehicle door component 100 by connecting methods such as spot welding, clamping, or the like, to provide a fixing point for assembling the exterior belt line molding corner 30 on the vehicle door component 100. The specific shape structure formed by the bent connection between the support part 23 and the fixing part 22, is adapted to the shape structure of the vehicle door component 100, so that it is conducive to the support part 23 being as close as possible to the vehicle door component 100 and being spaced apart from the vehicle door component 100, facilitating that the support part 23 is inserted between the first inserting part 41 and the second inserting part 44 and is fixed through the snapping part 43 of the first inserting part 41 and the snapping hole 21 on the support part 23, thereby improving the assembly stability among the exterior belt line molding corner 30, the mounting bracket 200, and the vehicle door component 100.

Specifically, in an embodiment, a length of the support part 23 in an extending direction of the exterior belt line molding corner 30 is longer than that of the fixing part 22. On the one hand, the connection strength of the mounting bracket 200 can be ensured, and at the same time, it facilitates the fixing of the mounting bracket 200. On the other hand, a plurality of snapping holes 21 snapped to the snapping parts 43 can be provided, and it is conducive to increasing the effective contact area with the exterior belt line molding insert 40, thereby effectively preventing the exterior belt line molding insert 40 from producing a rotation trend relative to the mounting bracket 200, and further improving the assembly stability between the exterior belt line molding insert 40 and the mounting bracket 200.

In an embodiment, the clamping part 32 and the exterior belt line molding insert 40 are integrally formed by injection molding. It should be understood that the exterior belt line molding insert 40 is provided with a through hole 441. When the clamping part 32 and the exterior belt line molding insert 40 are integrally formed by injection molding, the injection molding material is partially inserted into the through hole 441 to form the connecting convex part 323, the remaining injection molding material covers the exterior belt line molding insert 40, the processing technology is simple, and the effective contact area between the exterior belt line molding insert 40 and the clamping part 32 is as large as possible, which facilitates the acceleration of the production efficiency, and can improve the connection firmness between the exterior belt line molding insert 40 and the clamping part 32.

Referring to FIG. 4 to FIG. 5, in an embodiment, a protruding rib 311 laterally protrudes from the corner body 31 in a direction perpendicular to the vehicle door component 100. The protruding rib 311 is configured to abut against the vehicle door component 100. The protruding rib 311 is attached with the vehicle door component 100, which can effectively improve the close fit between the exterior belt line molding corner 30 and the vehicle door component 100, thereby improving the sealing performance of the vehicle.

In an embodiment, the corner body 31 is a semi-closed annular structure, and at least one notch 312 is provided on an inner annular surface of the corner body 31, where a plurality of notches 312 may be provided, the plurality of notches 312 are arranged at intervals, and a position of the notch 312 may be specifically arranged at a main deformation position when the corner body 31 is stressed, which facilitates the corner body 31 to produce reliable deformation, improves the service life of the corner body 31, and ensures the use effect of the exterior belt line molding corner 30. However, in other embodiments, the corner body 31 is a closed annular structure.

Referring to FIG. 1 to FIG. 4 and FIG. 9, in an embodiment, the vehicle door component 100 includes an exterior plate 11 and an interior plate 12. The interior plate 12 includes an interior plate body 121, a first connecting section 122 and a first bent section 123 connected between the interior plate body 121 and the first connecting section 122. The first connecting section 122 is attached with the exterior plate 11, and the mounting bracket 200 is fixedly provided at the first connecting section 122. It should be understood that the first bent section 123 is respectively connected to the interior plate body 121 and the first connecting section 122 with smooth transitions, to ensure the overall curve smoothness of the interior plate 12, and at the same time, the first connecting section 122 is enabled to gradually approach the exterior plate 11 and attach with the exterior plate 11, which can prevent external debris such as water, dust, sand, or the like from coming between the first connecting section 122 and the exterior plate 11 to enter the vehicle door component 100, thereby improving the sealing performance of the vehicle door component 100.

The mounting bracket 200 is fixedly provided at the first connecting section 122, that is, the fixing part 22 is fixedly connected to the first connecting section 122, so that the exterior belt line molding corner 30 can be assembled at an upper end portion of the vehicle door component 100 away from a hinge to the vehicle body, and further can be tightly attached with the vehicle body, to play a sealing role so that the vehicle door component 100 and the vehicle body are further sealed, thereby improving the sealing performance of the vehicle.

Further, in an embodiment, the exterior plate 11 includes a second connecting section 112, and the second connecting section 112 is provided with a flanging 113 along an edge of the second connecting section 112. The flanging 113 covers the first connecting section 122 to form a hemming structure. It should be understood that the first connecting section 122 gradually approaches the second connecting section 112, and is attached on one side with the second connecting section 112, where the second connecting section 112 is provided with the flanging 113 along the edge of the second connecting section 112, so that the flanging 113 is attached with the other side of the first connecting section 122, thereby covering the first connecting section 122 to form the hemming structure, in this way, the exterior plate 11 and the interior plate 12 form a whole, thereby improving the connection firmness and sealing performance of the vehicle door component 100.

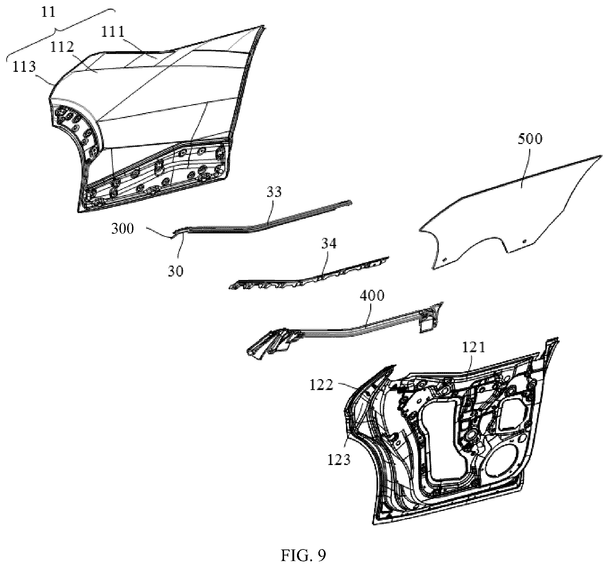

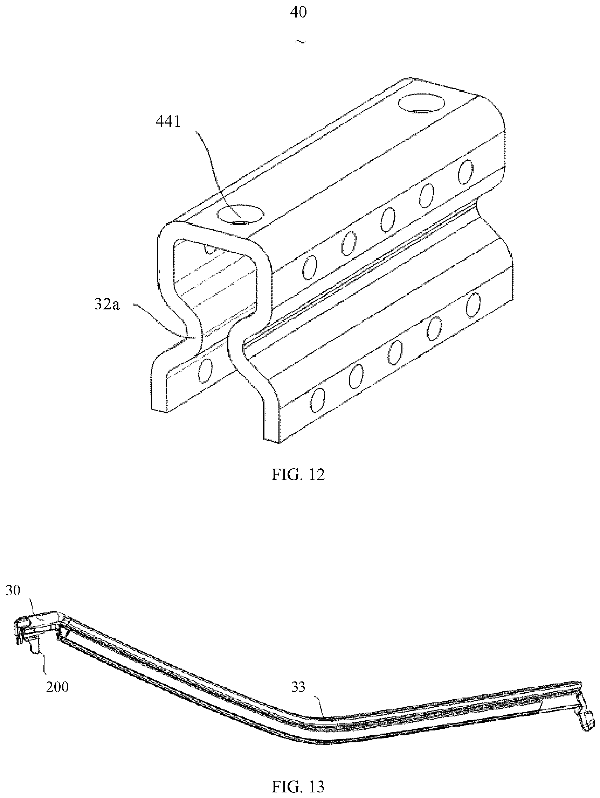

Referring to FIG. 9 and FIG. 13, in an embodiment, the exterior plate 11 further includes an exterior plate body 111, and the exterior plate body 111 and the interior plate body 121 are spaced apart to form an accommodating cavity for a window glass 500 to move. The exterior belt line molding assembly 300 further includes an exterior belt line molding body 33 connected to the exterior belt line molding corner 30, where the exterior belt line molding body 33 is configured to attach with a side of the window glass 500, and a horizontal height of a top end of the exterior belt line molding body 33 is lower than a horizontal height of a top end of the exterior plate body 111, which can ensure that the exterior belt line molding body 33 is hidden on a side of the exterior plate body 111 facing the interior plate body 121, thereby effectively ensuring the aesthetic appearance of the vehicle.

Specifically, the exterior plate body 111 is in a smooth transition with the second connection segment 112, and a fixing bracket 34 is fixed to an inner side of the exterior plate body 111. The exterior belt line molding body 33 is fixedly provided on the fixing bracket 34, and is provided with a sealing lip. The sealing lip contacts the window glass 500 to form a complete sealing buffer structure.

An interior belt line molding assembly 400 is clamped on the interior plate body 121, and the interior belt line molding assembly 400 is attached with the other side of the window glass 500, further improving the sealing performance.

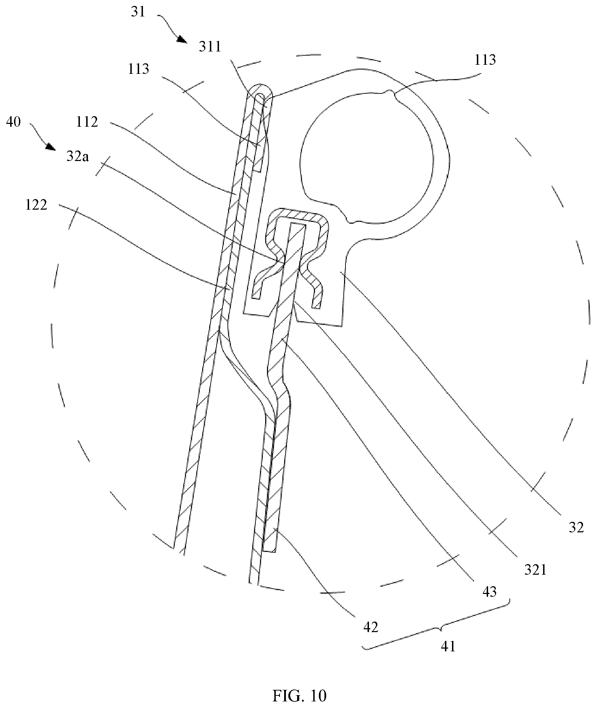

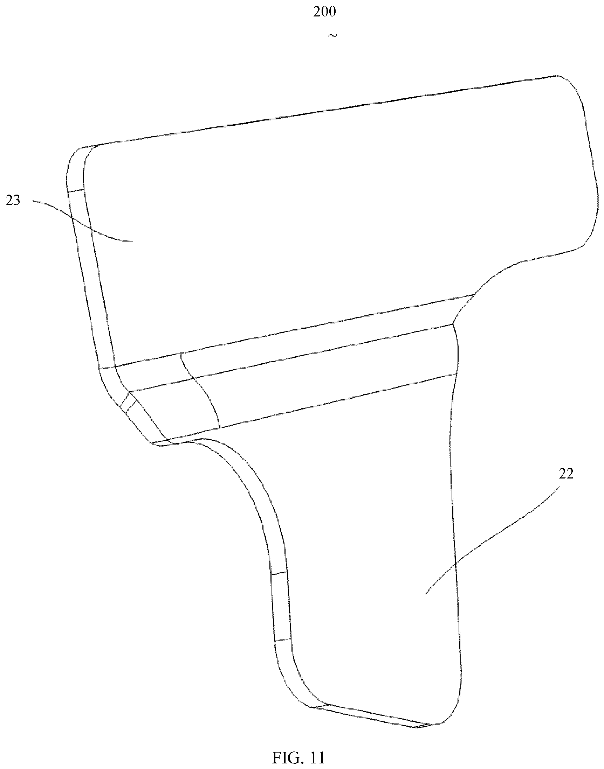

Referring to FIG. 10 to FIG. 12, in an embodiment, the exterior belt line molding corner 30 includes a corner body 31 and a clamping part 32 connected to a side of the corner body 31. The clamping part 32 clamps the mounting bracket 200, that is, the exterior belt line molding corner 30 can be directly inserted and the clamping part 32 can clamp the top end of the mounting bracket 200, which is conducive to improving the assembly efficiency of the exterior belt line molding corner 30.

Further, in an embodiment, at least one exterior belt line molding insert 40 is provided in the clamping part 32 along an extending direction of the corner body 31, and the exterior belt line molding insert 40 is configured to provide a clamping force for clamping the mounting bracket 200. By means of this arrangement, not only the structural strength of the clamping part 32 can be improved, but also the connection firmness and connection stability between the exterior belt line molding corner 30 and the mounting bracket 200 can be improved.

Specifically, the exterior belt line molding insert 40 can be made of a material having elastic performance, such as a metal material, or the like. A plurality of exterior belt line molding inserts 40 are provided; the plurality of exterior belt line molding inserts 40 are spaced apart and clamp the mounting bracket 200 together. The high-strength clamping points for the mounting bracket 200 are increased, so that the connection firmness and connection stability between the exterior belt line molding corner 30 and the mounting bracket 200 are greatly improved.

Further, as shown in FIG. 10 and FIG. 12, in an embodiment, the clamping part 32 has a clamping groove 321 which is open downwards. The exterior belt line molding insert 40 is arranged along a groove wall of the clamping groove 321, and is provided with a clamping convex part 32a protruding towards the mounting bracket 200. In this way, on the one hand, the exterior belt line molding insert 40 is arranged along the groove wall of the clamping groove 321, and the groove side wall of the clamping groove 321 corresponding to the clamping convex part 32a of the exterior belt line molding insert 40 can be more tightly attached with two opposite sides of the mounting bracket 200, thereby effectively limiting the movement of the exterior belt line molding corner 30 in a direction perpendicular to the groove side wall, and further improving the assembly stability of the exterior belt line molding corner 30. On the other hand, by inserting the mounting bracket 200 into the clamping groove 321 which is open downwards, it should be understood that, the groove bottom wall of the clamping groove 321 can abut against the top end of the mounting bracket 200, thereby limiting the movement of the exterior belt line molding corner 30 in the direction perpendicular to the groove bottom wall, and in cooperation with the mutual clamping of the two groove side walls of the clamping groove 321, the assembly stability of the exterior belt line molding corner 30 can be further improved. In addition, the mounting bracket 200 can play a positioning role, that is, the mounting bracket 200 serves as a fixing point on the vehicle door component 10, so that the exterior belt line molding corner 30 can quickly and accurately locate the mounting bracket 200, and the mounting bracket 200 is clamped through the clamping groove 321, thereby improving the assembly efficiency of the exterior belt line molding corner 30.

Specifically, in an embodiment, the clamping part 32 and the exterior belt line molding insert 40 are integrally formed by injection molding. As shown in FIG. 6, a plurality of through holes 441 are provided on the exterior belt line molding insert 40. When the clamping part 32 and the exterior belt line molding insert 40 are integrally formed by injection molding, the injection molding material is partially inserted into the through holes 441, which increases the effective contact area with the exterior belt line molding insert 40, thereby improving the connection firmness of the clamping part 32 and the exterior belt line molding insert 40.

In an embodiment, the mounting bracket 200 includes a fixing part 22 and a support part 23 bendingly connected to the fixing part 22, the fixing part 22 is fixedly connected to the vehicle door component 10, and the support part 23 is fixedly connected to the exterior belt line molding corner 30. It should be understood that the fixing part 22 can be fixed on the vehicle door component 10 by means of connecting methods such as spot welding, clamping, or the like, to provide a fixing point for assembling the exterior belt line molding corner 30 on the vehicle door component 10. The specific shape structure formed by the bent connection of the support part 23 and the fixing part 22 is adapted to the shape structure of the vehicle door component 10, which facilitates that the support part 23 is as close as possible to the vehicle door component 10 and is spaced apart from the vehicle door component 10, further facilitates that the support part 23 is fixed by being inserted into the clamping groove 321 of the exterior belt line molding corner 30, and improves the assembly stability among the exterior belt line molding corner 30, the mounting bracket 200 and the vehicle door component 10.

Specifically, in an embodiment, a length of the support part 23 in an extending direction of the exterior belt line molding corner 30 is longer than that of the fixing part 22. On the one hand, the connection strength of the mounting bracket 200 can be ensured, and at the same time, the fixing of the mounting bracket 200 is facilitated. On the other hand, it is conducive to increasing the effective contact area with the exterior belt line molding corner 30, and the flipping of the exterior belt line molding corner 30 can be avoided, thereby improving the assembly stability of the exterior belt line molding corner 30. Further, a plurality of exterior belt line molding inserts 40 can also act on the support part 23 together, thereby further improving the connection firmness of the exterior belt line molding corner 30.

The present application further provides a vehicle. The vehicle includes an exterior belt line molding component. For a specific structure of the exterior belt line molding component, reference can be made to the foregoing embodiments. Since the vehicle adopts all technical solutions of all the foregoing embodiments, the vehicle at least has all beneficial effects brought by the technical solutions of the foregoing embodiments, and details will not be described herein again.

The foregoing descriptions are merely optional embodiments of the present application, and are not intended to limit the patent scope of the present application. Under the inventive concept of the present application, any equivalent structural change made by using the specification and the accompanying drawings of the present application, or direct/indirect applications in other related technical fields, should be included in the patent protection scope of the present application.

## Claims

1. An exterior belt line molding component, comprising:
a vehicle door component;
a mounting bracket, connected to the vehicle door component and located on an inner side at a corner of an end portion of the vehicle door component; and
an exterior belt line molding assembly, comprising an exterior belt line molding corner and an exterior belt line molding insert, wherein the exterior belt line molding insert is fixedly connected to the exterior belt line molding corner, and is configured to be snap-fitted with the mounting bracket.

2. The exterior belt line molding component according to claim 1, wherein the exterior belt line molding corner comprises a corner body and a clamping part connected to a side of the corner body; the clamping part has a clamping groove which is open downwards; the exterior belt line molding insert is at least partially inserted in a groove wall of the clamping groove; the mounting bracket is inserted into the clamping groove and is snap-fitted with the exterior belt line molding insert.

3. The exterior belt line molding component according to claim 2, wherein the exterior belt line molding insert comprises a first inserting part and a snapping part arranged at the first inserting part; the first inserting part is fixed to a groove side wall of the clamping groove; the snapping part protrudes from the first inserting part and extends towards another groove side wall of the clamping groove; the mounting bracket is provided with a snapping hole corresponding to the snapping part.

4. The exterior belt line molding component according to claim 3, wherein the first inserting part is provided with a via hole; a connecting part is fixed at a hole wall of the via hole; the connecting part is arranged in parallel with the first inserting part, and extends in a direction away from the mounting bracket; and the snapping part is laterally connected to the connecting part.

5. The exterior belt line molding component according to claim 4, wherein the connecting part comprises a guide section and a stopping section; a surface of the guide section facing another groove side wall of the clamping groove is a guiding cambered surface; the snapping part is provided at a joint between the guide section and the stopping section; and a surface of the snapping part facing the guide section is in a smooth transition with the guiding cambered surface.

6. The exterior belt line molding component according to claim 4, wherein an avoidance hole is provided at the groove side wall of the clamping groove corresponding to the via hole, and the avoidance hole is configured for deformation of the connecting part.

7. The exterior belt line molding component according to claim 3, wherein the exterior belt line molding insert further comprises a second inserting part; the second inserting part is bendingly connected to the first inserting part, and is fixedly connected to another groove side wall of the clamping groove; and the mounting bracket is located between the first inserting part and the second inserting part.

8. The exterior belt line molding component according to claim 7, wherein the second inserting part is provided with at least one through hole; the through hole penetrates through the first inserting part and is arranged adjacent to the snapping part; and the clamping part is provided with a connecting convex part which is adapted to the through hole.

9. The exterior belt line molding component according to claim 7, wherein the second inserting part is provided with an opening, and the opening is arranged corresponding to the snapping part.

10. The exterior belt line molding component according to claim 3, wherein the mounting bracket comprises a fixing part and a support part; the fixing part is fixedly connected to the vehicle door component; and the support part is bendingly connected to the fixing part, and is provided with the snapping hole.

11. The exterior belt line molding component according to claim 10, wherein a length of the support part in an extending direction of the exterior belt line molding corner is longer than that of the fixing part.

12. The exterior belt line molding component according to claim 2, wherein the clamping part and the exterior belt line molding insert are integrally formed by injection molding.

13. The exterior belt line molding component according to claim 2, wherein a protruding rib laterally protrudes from the corner body in a direction perpendicular to the vehicle door component, and the protruding rib is configured to abut against the vehicle door component.

14. The exterior belt line molding component according to claim 2, wherein the corner body is a semi-closed annular structure, and at least one notch is provided on an inner annular surface of the corner body.

15. The exterior belt line molding component according to claim 1, wherein the vehicle door component comprises an exterior plate and an interior plate; the interior plate comprises an interior plate body, a first connecting section and a first bent section connected between the interior plate body and the first connecting section; the first connecting section is attached with the exterior plate, and the mounting bracket is fixedly provided at the first connecting section.

16. The exterior belt line molding component according to claim 15, wherein the exterior plate comprises a second connecting section; the second connecting section is provided with a flanging along an edge of the second connecting section, and the flanging covers the first connecting section to form a hemming structure.

17. The exterior belt line molding component according to claim 15, wherein the exterior plate further comprises an exterior plate body, and the exterior plate body and the interior plate body are spaced apart to form an accommodating cavity for a window glass to move;
the exterior belt line molding assembly further comprises an exterior belt line molding body connected to the exterior belt line molding corner, wherein the exterior belt line molding body is configured to attach with a side of the window glass, and a horizontal height of a top end of the exterior belt line molding body is lower than a horizontal height of a top end of the exterior plate body.

18. A vehicle, comprising the exterior belt line molding component according to any one of claims 1 to 17.
